# EUROPEAN PATENT APPLICATION

(11) **EP 2 611 155 A1**
(43) Date of publication of application: **03.07.2013**
(21) Application number: 12005755.9
(22) Date of filing: 08.08.2012
(51) Int. Cl.: H04N 7/26

(54) **Adapting transform coefficient scaling in video/image coding to block features identified in the transform domain**

(30) Priority: 28.12.2011 US 201113338877
(71) Applicant: Broadcom Corporation, Irvine, CA 92617 (US)
(72) Inventor: Zhang, Lei, Palo Alto, CA 94301 (US)
(74) Representative: Jehle, Volker Armin

(57) **Abstract**

Methods, systems, and computer program products are provided to provide transform coefficient scaling at a block level in both a video/image encoder and a video/image decoder, rather than at a sequence- or picture-level in existing coding techniques. When providing and communicating transform coefficient scaling at the block level, scaling matrices that adapt to block contents can be used to improve the visual acuity of a given block when encoding a video picture or still image, instead of having to select a scaling matrix that would be applied to the entire picture. This approach allows more detail to be preserved in video and image coding.

## Description

### BACKGROUND OF THE INVENTION

### Field of Invention

The present invention relates generally to video processing and, more particularly, to video coding techniques.

### Related Art

One of the challenges involved in video coding is how to provide compressible data without compromising compressed subjective visual quality of a video. Various solutions to this problem have been provided, such as 8x8 block discrete cosine transforms or, more recently, 4x4 integer arithmetic block transforms such as those used in the AVC/H.264 video coding standard. The transformed coefficient matrix is scaled and quantized prior to lossless coding using such modem coding algorithm such as CAVLC or CABAC as in the AVC/H.264 standard.

Existing coding standards, such as AVC/H.264, signal transform scaling matrices used in transform coefficient scaling at a sequence or picture level. These matrices applied to an entire picture or sequence of pictures, as signaled, in order to reconstitute a picture at a decoder side. While this technique provides good image compressibility and the ability to recover image data through careful selection of matrices, there is still a large loss of fidelity in many scenarios mainly because the scaling is applied universally to all transformed coefficient matrices without considering differences in the transformed coefficient distribution within the matrix that are related to image details, such as edges, textures, or smooth objects.

Accordingly, what is desired is a transform scaling technique that retains more image details.

### BRIEF SUMMARY OF THE INVENTION

According to an aspect, a method comprises:
dividing a picture into a set of blocks;
analyzing transform frequency domain characteristics of a block of the set of blocks;
categorizing the block based on the transform frequency domain characteristics; and
providing a characteristic-specific scaling matrix corresponding to the category of the block.

Advantageously, categorizing the block comprises categorizing the block as an edge block based on a narrow distribution of amplitudes at a high frequency band.

Advantageously, categorizing the block comprises categorizing the block as a smooth block based on a narrow distribution of amplitudes at a low frequency band.

Advantageously, categorizing the block comprises categorizing the block as a texture block based on a distribution of amplitudes across frequencies.

Advantageously, providing the characteristic-specific scaling matrix comprises providing a characteristic-specific scaling matrix that improves visual acuity of the block based on its transform frequency domain characteristics.

Advantageously, providing the characteristic-specific scaling matrix comprises:
providing scaling matrix selection information for the block in a data stream; and
communicating the data stream to a decoder configured to perform an inverse transform operation using the scaling matrix.

Advantageously, the method further comprises:
providing a default scaling matrix in the data stream.

According to an aspect, a computer-readable storage device is provided having instructions stored thereon, execution of which, by a computing device, causes the computing device to perform operations comprising:
dividing a picture into a set of blocks;
analyzing transform frequency domain characteristics of a block of the set of blocks;
categorizing the block based on the transform frequency domain characteristics; and
providing a characteristic-specific scaling matrix corresponding to the category of the block.

Advantageously, categorizing the block comprises categorizing the block as an edge block based on a narrow distribution of amplitudes at a high frequency band.

Advantageously, categorizing the block comprises categorizing the block as a smooth block based on a narrow distribution of amplitudes at a low frequency band.

Advantageously, categorizing the block comprises categorizing the block as a texture block based on a distribution of amplitudes across frequencies.

Advantageously, providing the characteristic-specific scaling matrix comprises:
providing a characteristic-specific scaling matrix that improves visual acuity of the block based on its transform frequency domain characteristics; and
communicating the data stream to a decoder configured to perform an inverse transform operation using the scaling matrix.

Advantageously, providing the characteristic-specific scaling matrix comprises providing scaling matrix selection information for the block in a data stream.

Advantageously, the operations further comprise:
providing a default scaling matrix in the data stream.

According to an aspect, a system comprises:
a memory configured to store modules comprising:
   a dividing module configured to divide a picture into a set of blocks,
   an analyzing module configured to analyze transform frequency domain characteristics of a block of the set of blocks,
   a categorizing module configured to categorize the block based on the transform frequency domain characteristics, and
   a providing module configured to provide a characteristic-specific scaling matrix corresponding to the category of the block; and
one or more processors configured to process the modules.

Advantageously, the categorizing module is further configured to categorize the block as an edge block based on a narrow distribution of amplitudes at a high frequency band.

Advantageously, the categorizing module is further configured to categorize the block as a smooth block based on a narrow distribution of amplitudes at a low frequency band.

Advantageously, the categorizing module is further configured to categorize the block as a texture block based on a distribution of amplitudes across frequencies.

Advantageously, the providing module is further configured to provide a characteristic-specific scaling matrix that improves visual acuity of the block based on its transform frequency domain characteristics.

Advantageously, the providing module is further configured to provide scaling matrix selection information for the block in a data stream and communicate the data stream to a decoder configured to perform an inverse transform operation using the scaling matrix.

Advantageously, the providing module is further configured to provide a default scaling matrix in the data stream.

### BRIEF DESCRIPTION OF THE DRAWINGS/FIGURES

The accompanying drawings, which are incorporated herein and form a part of the specification, illustrate embodiments of the present invention and, together with the description, further serve to explain the principles of the invention and to enable a person skilled in the relevant art to make and use the invention.

FIG. 1 illustrates a known coding process, including encoding and decoding components.

FIG. 2 is a flowchart illustrating steps by which to apply a per-block scaling matrix, in accordance with an embodiment of the present invention.

FIG. 3 is a flowchart illustrating steps by which a scaling matrix is provided, in accordance with an embodiment of the present invention.

FIG. 4 illustrates several video coding techniques in accordance with embodiments of the present invention.

FIG. 5 depicts an example computer system in which embodiments of the present invention may be implemented.

The invention will be described in detail with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION OF THE INVENTION

### I. INTRODUCTION

The following detailed description of the present invention refers to the accompanying drawings that illustrate exemplary embodiments consistent with this invention. Other embodiments are possible, and modifications can be made to the embodiments within the spirit and scope of the invention. Therefore, the detailed description is not meant to limit the invention. Rather, the scope of the invention is defined by the appended claims.

It would be apparent to one of skill in the art that the present invention, as described below, can be implemented in many different embodiments of software, hardware, firmware, and/or the entities illustrated in the figures. Any actual software code with the specialized control of hardware to implement the present invention is not limiting of the present invention. Thus, the operational behavior of the present invention will be described with the understanding that modifications and variations of the embodiments are possible, and within the scope and spirit of the present invention.

Reference to modules in this specification and the claims means any combination of hardware, software, or firmware components for performing the indicated function. A module need not be a rigidly defined entity, such that several modules may overlap hardware and software components in functionality. For example, a software module may refer to a single line of code within a procedure, the procedure itself being a separate software module. One skilled in the relevant arts will understand that the functionality of modules may be defined in accordance with a number of stylistic or performance-optimizing techniques, for example.

One skilled in the relevant arts will appreciate that a number of application-specific integrated circuit (ASIC) example implementations are within the scope and spirit of this invention, such as a Blu-Ray disc player, cable set-top box, or home media gateway.

According to an embodiment of the invention there is provided a method including dividing a picture into a set of blocks, analyzing transform frequency domain characteristics of a block of the set of blocks, categorizing the block based on the transform frequency domain characteristics, and providing a characteristic-specific scaling matrix corresponding to the category of the block.

Additional embodiments of the invention include a computer-readable storage device having instructions stored thereon, execution of which, by a computing device, causes the computing device to perform operations comprising dividing a picture into a set of blocks, analyzing transform frequency domain characteristics of a block of the set of blocks, categorizing the block based on the transform frequency domain characteristics, and providing a characteristic-specific scaling matrix corresponding to the category of the block.

Further embodiments of the invention include a system comprising a memory configured to store modules comprising a dividing module configured to divide a picture into a set of blocks, an analyzing module configured to analyze transform frequency domain characteristics of a block of the set of blocks, a categorizing module configured to categorize the block based on the transform frequency domain characteristics, and a providing module configured to provide a characteristic-specific scaling matrix corresponding to the category of the block, and one or more processors configured to process the modules.

Further features and advantages of the invention, as well as the structure and operation of various embodiments of the invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

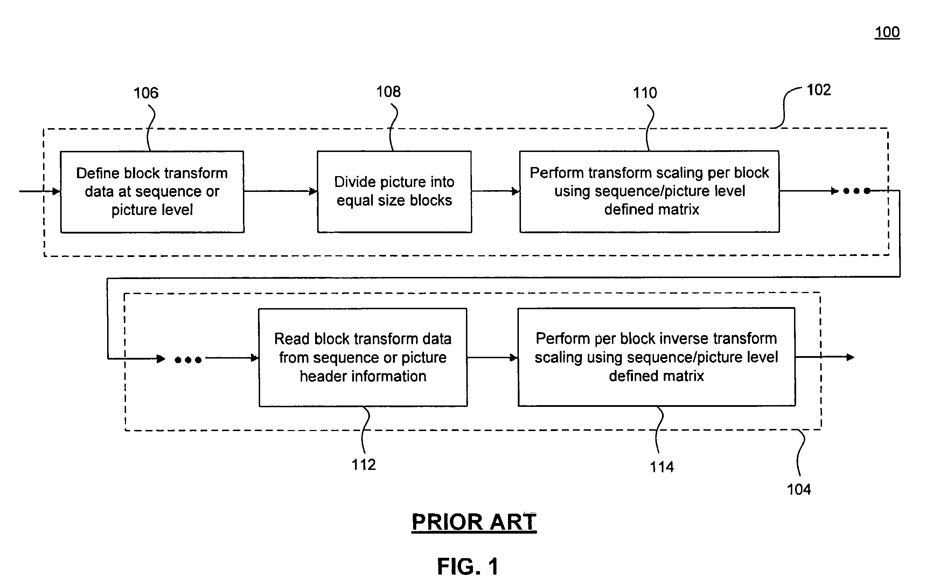

FIG. 1 illustrates an exemplary coding standard 100, including encoding 102 and decoding 104 components. Throughout the discussion herein, reference will be made to the video coding standard of AVC/H.264, although one skilled in the art will recognize that the techniques can apply to other video coding applications, as well as still-picture coding (e.g., JPEG).

AVC/H.264 is a commonly used coding standard for high definition video, such as used in Blu-ray® Disc players. In AVC/H.264, a video stream is made up of many individual pictures. Those pictures are each constituted by a number of coding blocks - blocks of 16x16 pixels, blocks of 4x4 pixels, 16x8, 4x8, etc.

During encoding using the AVC/H.264 standard, coding block sizes are determined based on characteristics of the video stream (e.g., whether a set of pixels shows movement across two separate pictures). In some cases, it would be preferable to use a smaller block size (e.g., 4x4) to retain more detail, whereas in other it would be preferable to use a larger block size (e.g., 16x16) to improve compressibility of the video. Each pixel block is then transformed by application of a block transform matrix.

In a video coding standard such as AVC/H.264, a block transform scale matrix is defined at a sequence or picture level at step 106. An encoder would therefore insert at predetermined locations (e.g., at the start of a stream, before certain picture frames, etc.) some data indicating what block transform scale matrix to use. Then, at step 108, each picture being encoded is divided into blocks (e.g., 4x4 blocks, 16x16 blocks, or some combination of those sizes and/or others). Each block is then quantized and scaled at step 110 using the sequence or picture-level defined scaling matrix information.

While coding blocks can be compressed in a number of different ways for the purposes of high image quality compression, two particular compression techniques are discussed here: quantization and transform coefficient scaling. Quantization, which can be handled separately from transform coefficient scaling or together as part of a same process, is a signal processing technique by which a larger set of values is reduced into a smaller set to provide lossy compression. Proper quantization results in a relatively small number of discrete symbols being used to represent the entire stream, individual pictures, etc.

Transform coefficient scaling, on the other hand, adjusts the transform coefficients (e.g., in a transform matrix being applied to a coding block) to accentuate certain characteristics of the video. For example, a darker image may need to be adjusted so that the quantized discrete symbols occur primarily in a darker frequency region.

However, as shown at step 106, AVC/H.264 defines the block transform data at a sequence or picture level. This could be handled, for example, using a value corresponding to a particular predefined scaling matrix to be used, or even the scaling matrix itself, among other values. Regardless of the particular manner in which the block transform data is signaled, at best all coding blocks within a single picture will apply the same transform scaling matrix (e.g., a mostly dark picture will apply the same block transform scaling as a colorful flower throughout the same picture or sequence, regardless).

On the decoding side, the decoder consequently reads block transform scaling matrix information from sequence or picture header information at step 112, and performs per-block inverse transform scaling using the sequence or picture-level defined matrix at step 114.

### II. PER-BLOCK TRANSFORM COEFFICIENT SCALING

As noted above, the sequence- or picture-level block transform scaling matrix used in AVC/H.264 or similar coding standards suffers from the inflexibility associated with applying the same block transform scaling matrix to all coding blocks in a picture. Instead, it is preferable to provide a mechanism whereby each block can have different block transform data applied.

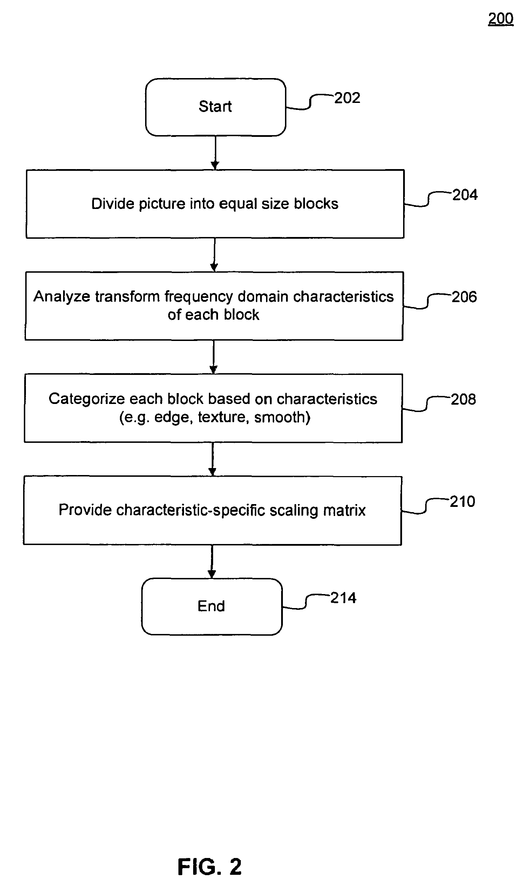

FIG. 2 is a flowchart of a process 200 including steps by which to apply a per-block scaling matrix, in accordance with an embodiment of the present invention. The method begins at step 202 and proceeds to step 204 where a picture is divided into equal sized blocks (e.g., 4x4, 4x8, 16x16, etc.). One skilled in the relevant arts will appreciate that this picture could be part of a sequence of pictures, or an individual still-frame picture, and the techniques disclosed herein can therefore apply to both motion and still images.

At step 206, each block is analyzed for its particular frequency domain characteristics. Each block is then categorized at step 208 based on these characteristics, and a characteristic-specific scaling matrix is applied and provided with the block at step 210. The method end at step 214.

One skilled in the relevant arts will appreciate that the aforementioned steps could be executed in different combinations and with varying degrees of parallelism. For example, each block may be processed in accordance with the aforementioned steps in parallel with processing other blocks.

In accordance with any embodiment of the present invention, blocks can be categorized according to whether they represent an edge, a texture, a smooth portion, or other characteristics of an image. In order to determine which category a block belongs to, block feature detection at step 206 is performed in the transform coefficient domain, where transform coefficients at different frequencies are used to determine amplitudes of the image block at two-dimensional transform-domain frequencies. One skilled in the relevant arts will appreciate that any mathematical formula that provides this amplitude data using available transform coefficient domain data can be utilized.

When categorizing the block at step 208, the distributions of these amplitudes are used to select which category to apply to the block. One skilled in the relevant arts will appreciate that while categorization as an edge, texture, or smooth block is discussed here, different categories can instead be utilized based on block features, and the use of these categories is provided by way of example, and not limitation.

### III. BLOCK CATEGORIZATION

Using the example categories of an edge, texture, or smooth block, it is possible to study the transform coefficients in order to determine which category a block belongs to. For example, a narrow distribution (i.e., clustered within a particular frequency band) of significant amplitudes at a high frequency band would indicate the presence of an edge in pixel spatial domain. A narrow distribution of significant amplitude at a low frequency band would indicate the presence of a smooth block in the pixel spatial domain. If instead the significant amplitudes are distributed across frequency bands, this indicates the presence of a detailed texture in the block pixel data.

Each of these various block types presents a unique challenge for a lossy video coder. For example, if a block with high-contrast edges (bright and dark edges) is scaled the same way as a block with smooth bright pixels, the edge may lose the sharp definition expected of a high-contrast edge. This is so even if all of the information is there, simply because the edge blocks are not properly scaled in a manner consistent with a viewer's expected perceptions. Such loss of visual acuity is common with existing sequence- or picture-level scaling, which applies the same scaling matrix to all blocks.

Instead, as described at step 210, a scaling matrix consistent with the block characteristics can be applied at the block level. This means that, in accordance with an embodiment of the present invention, a block with pixel data defining an edge can be scaled differently from a block defining a texture or a smooth pixel set.

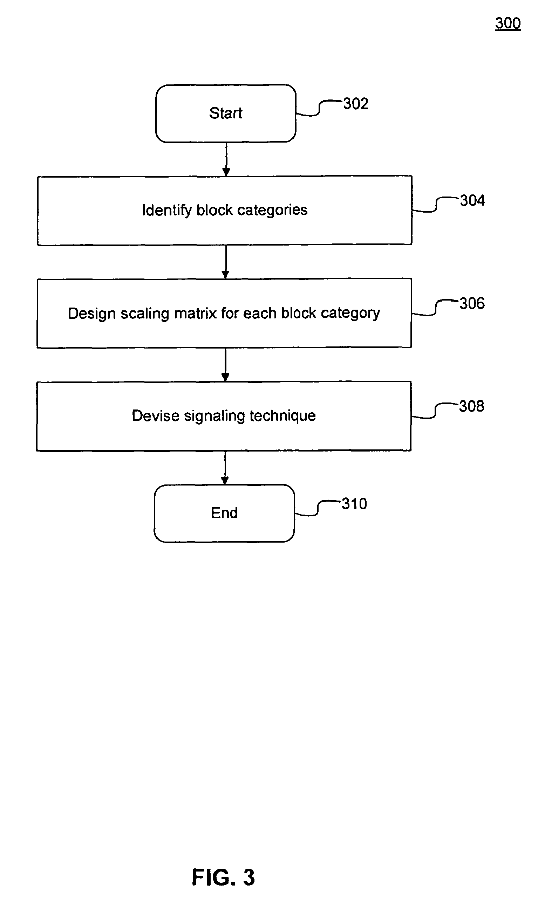

FIG. 3 is a flowchart of a process 300 including steps by which a scaling matrix is provided, in accordance with an embodiment of the present invention. The method begins at step 302 and proceeds to step 304 where the various block categories to be defined are identified. For example, if blocks will be categorized as edges, textures, or smooth, then scaling matrices are needed for each category. At step 306, therefore, a scaling matrix is designed for each block category.

One skilled in the relevant arts will appreciate that a scaling matrix can be designed by any technique, and scaling matrix design in general (not in the context of block-level application) is known in the art. In particular, existing stream- or picture-level scaling matrices may take into account whether a picture or sequence of pictures will, for example, showcase a large number of edges as opposed to textures or smooth blocks. In that scenario, a scaling matrix that is biased toward improving visual acuity of edges may be used, to the detriment of any textured or smooth blocks. Those existing techniques can be applied here at the block level, without the need for tradeoffs (e.g., a scaling matrix that improves visual acuity of edges can be used here, and only applied to edge blocks).

At step 308, a particular signaling technique is devised, and the method ends at step 310. Signaling techniques are discussed in further detail below.

### IV. SIGNALING BLOCK DATA

With a scaling matrix defined for each block category, an encoder must include information in an encoded bit stream that notifies a compatible decoder to use a particular scaling matrix for a given block. One skilled in the relevant arts will appreciate that a number of different techniques can be utilized to signal this information. Several such techniques are provided herein by way of example, and not limitation.

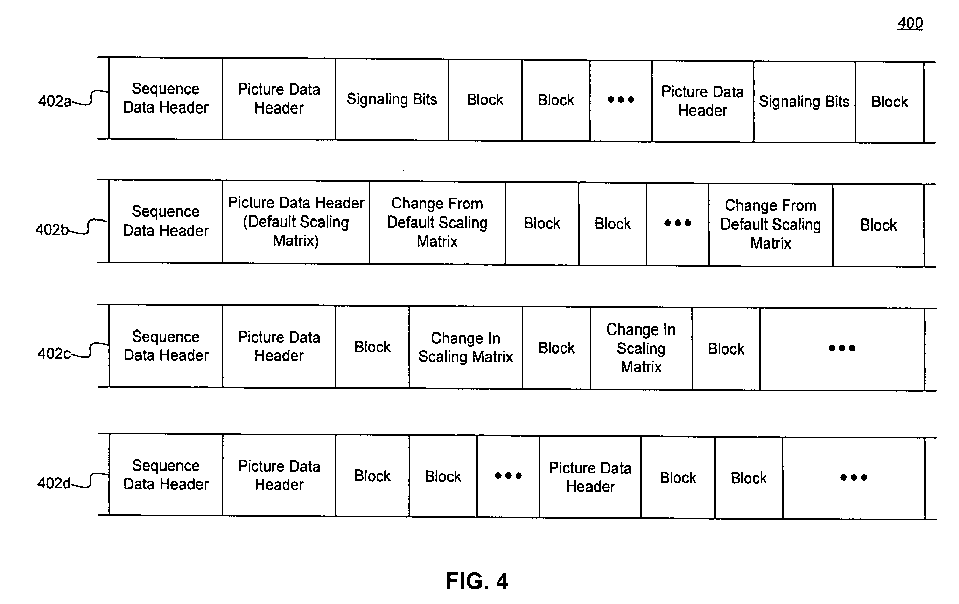

FIG. 4 illustrates several video coding techniques collectively referred to by reference numeral 400, in accordance with embodiments of the present invention. A first such technique is coding technique 402a, in which signaling bits are provided on a per-block basis to indicate which scaling matrix to use. In the particular technique as shown in 402a, all of the signaling bits are provided at a per-picture level, but contain information for each block within that picture indicating which scaling matrix to apply to a corresponding block. Variants of this approach could include, by way of example and not limitation, providing the signaling bits for each block immediately before the corresponding block in the sequence, together with groups of blocks, or for all of the blocks from multiple pictures.

The content of the signaling bits may also vary, and one skilled in the relevant arts will appreciate that signaling which scaling matrix to apply to a given block can be accomplished in a number of ways. For example, data bits can be provided to tell the decoder which scaling matrix to apply from a set of known scaling matrices. These scaling matrices may be known to the decoder by virtue of having been previously declared in the video stream, or as part of a pre-defined set of scaling matrices known by the decoder. Alternatively, in some applications the scaling matrix for a block or group of blocks can be provided in its entirety wherever the signaling bits occur.

An alternative implementation is shown as 402b. In this exemplary implementation, a default scaling matrix is provided within the picture data header. This default scaling matrix could alternatively be provided elsewhere in the video stream. As with prior approaches, the default scaling matrix could serve as a sequence- or picture-level scaling matrix, but with the option to provide a change from the default scaling matrix (as shown in 402b) that provides for block-level scaling matrix changes. This change could be in the form of signaling bits as before, as changes relative to the default scaling matrix, or any other mechanism.

Yet another implementation is shown as 402c. In this implementation, changes in the scaling matrix are relative to the scaling matrix of the preceding block's scaling matrix. This is similar to 402b's implementation, but changes are relative to the preceding block rather than the default scaling matrix.

Another implementation is shown as 402d. In this implementation, selection of the scaling matrix is not directly encoded into the video stream, but is dependent on prior decoded data. As the decoder decodes pixels or transformed coefficients of a preceding neighboring block, the decoder selects the appropriate scaling matrix for each block.

### V. EXAMPLE COMPUTER SYSTEM IMPLEMENTATION

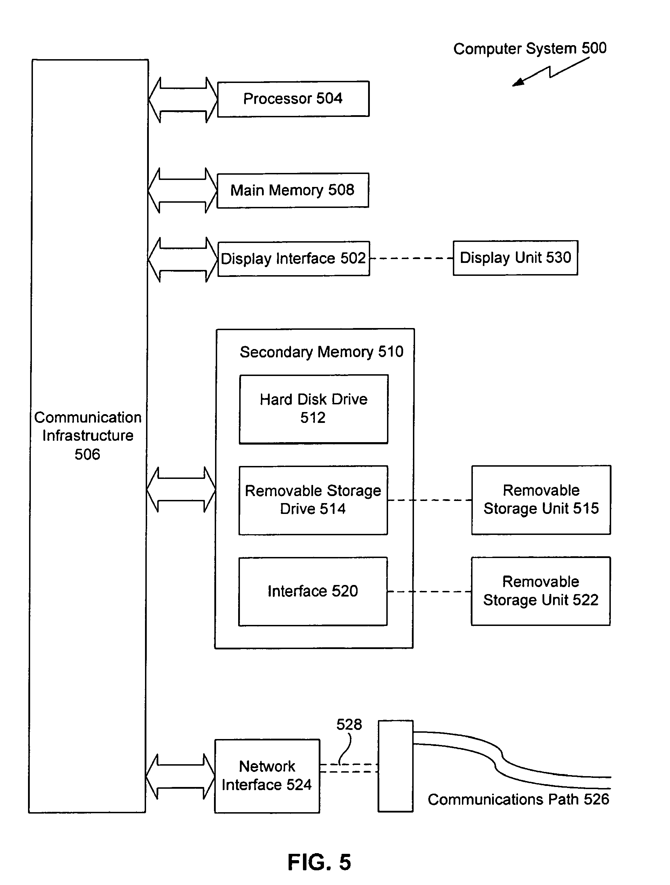

Various aspects of the present invention can be implemented by software, firmware, hardware, or a combination thereof. FIG. 5 illustrates an example computer system 500 in which the present invention, or portions thereof, can be implemented as computer-readable code. For example, process 200 (FIG. 2) and process 300 (FIG. 3) can be implemented in system 500. Various embodiments of the invention are described in terms of this example computer system 500. After reading this description, it will become apparent to a person skilled in the relevant art how to implement the invention using other computer systems and/or computer architectures.

Computer system 500 includes one or more processors, such as processor 504. Processor 504 can be a special purpose or a general purpose processor. Processor 504 is connected to a communication infrastructure 506 (for example, a bus or network).

Computer system 500 also includes a main memory 508, preferably random access memory (RAM), and may also include a secondary memory 510. Secondary memory 510 may include, for example, a hard disk drive 512, a removable storage drive 514, and/or a memory stick. Removable storage drive 514 may comprise a floppy disk drive, a magnetic tape drive, an optical disk drive, a flash memory, or the like. The removable storage drive 514 reads from and/or writes to a removable storage unit 515 in a well-known manner. Removable storage unit 515 may comprise a floppy disk, magnetic tape, optical disk, etc. that is read by and written to by removable storage drive 514. As will be appreciated by persons skilled in the relevant art(s), removable storage unit 515 includes a computer usable storage medium having stored therein computer software and/or data.

In alternative implementations, secondary memory 510 may include other similar means for allowing computer programs or other instructions to be loaded into computer system 500. Such means may include, for example, a removable storage unit 522 and an interface 520. Examples of such means may include a program cartridge and cartridge interface (such as that found in video game devices), a removable memory chip (such as an EPROM, or PROM) and associated socket, and other removable storage units such as removable storage unit 522 and interfaces such as interface 520 that allow software and data to be transferred from the removable storage unit 522 to computer system 500.

Computer system 500 may also include a communications interface 524. Communications interface 524 allows software and data to be transferred between computer system 500 and external devices. Communications interface 524 may include a modem, a network interface (such as an Ethernet card), a communications port, a PCMCIA slot and card, or the like. Software and data transferred via communications interface 524 are in the form of signals that may be electronic, electromagnetic, optical, or other signals capable of being received by communications interface 524. These signals are provided to communications interface 524 via a communications path 526. Communications path 526 carries signals and may be implemented using wire or cable, fiber optics, a phone line, a cellular phone link, an RF link or other communications channels.

In this document, the terms "computer program medium" and "computer usable medium" are used to generally refer to media such as removable storage unit 515, removable storage unit 522, and a hard disk installed in hard disk drive 512. Signals carried over communications path 526 can also embody the logic described herein. Computer program medium and computer usable medium can also refer to memories, such as main memory 508 and secondary memory 510, which can be memory semiconductors (e.g. DRAMs, etc.). These computer program products are means for providing software to computer system 500.

Computer programs (also called computer control logic) are stored in main memory 508 and/or secondary memory 510. Computer programs may also be received via communications interface 524. Such computer programs, when executed, enable computer system 500 to implement the present invention as discussed herein. In particular, the computer programs, when executed, enable processor 504 to implement the processes of the present invention, such as the steps in the methods illustrated by flowcharts 200 of FIG. 2 and 300 of FIG. 3, discussed above. Accordingly, such computer programs represent controllers of the computer system 500. Where the invention is implemented using software, the software may be stored in a computer program product and loaded into computer system 500 using removable storage drive 514, interface 520, hard drive 512 or communications interface 524.

The invention is also directed to computer program products comprising software stored on any computer useable medium. Such software, when executed in one or more data processing device, causes a data processing device(s) to operate as described herein. Embodiments of the invention employ any computer useable or readable medium, known now or in the future. Examples of computer useable mediums include, but are not limited to, primary storage devices (e.g., any type of random access memory), secondary storage devices (e.g., hard drives, floppy disks, CD ROMS, ZIP disks, tapes, magnetic storage devices, optical storage devices, MEMS, nanotechnological storage device, etc.), and communication mediums (e.g., wired and wireless communications networks, local area networks, wide area networks, intranets, etc.).

### VI. CONCLUSION

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A method comprising:
dividing a picture into a set of blocks;
analyzing transform frequency domain characteristics of a block of the set of blocks;
categorizing the block based on the transform frequency domain characteristics; and
providing a characteristic-specific scaling matrix corresponding to the category of the block.

2. The method of claim 1, wherein categorizing the block comprises categorizing the block as an edge block based on a narrow distribution of amplitudes at a high frequency band.

3. The method of claim 1, wherein categorizing the block comprises categorizing the block as a smooth block based on a narrow distribution of amplitudes at a low frequency band.

4. The method of claim 1, wherein categorizing the block comprises categorizing the block as a texture block based on a distribution of amplitudes across frequencies.

5. The method of claim 1, wherein providing the characteristic-specific scaling matrix comprises providing a characteristic-specific scaling matrix that improves visual acuity of the block based on its transform frequency domain characteristics.

6. The method of claim 1, wherein providing the characteristic-specific scaling matrix comprises:
providing scaling matrix selection information for the block in a data stream; and
communicating the data stream to a decoder configured to perform an inverse transform operation using the scaling matrix.

7. The method of claim 6, further comprising:
providing a default scaling matrix in the data stream.

8. A computer-readable storage device having instructions stored thereon, execution of which, by a computing device, causes the computing device to perform operations comprising:
dividing a picture into a set of blocks;
analyzing transform frequency domain characteristics of a block of the set of blocks;
categorizing the block based on the transform frequency domain characteristics; and
providing a characteristic-specific scaling matrix corresponding to the category of the block.

9. A system comprising:
a memory configured to store modules comprising:
a dividing module configured to divide a picture into a set of blocks,
an analyzing module configured to analyze transform frequency domain characteristics of a block of the set of blocks,
a categorizing module configured to categorize the block based on the transform frequency domain characteristics, and
a providing module configured to provide a characteristic-specific scaling matrix corresponding to the category of the block; and
one or more processors configured to process the modules.

10. The system of claim 9, wherein the categorizing module is further configured to categorize the block as an edge block based on a narrow distribution of amplitudes at a high frequency band.

11. The system of claim 9, wherein the categorizing module is further configured to categorize the block as a smooth block based on a narrow distribution of amplitudes at a low frequency band.

12. The system of claim 9, wherein the categorizing module is further configured to categorize the block as a texture block based on a distribution of amplitudes across frequencies.

13. The system of claim 9, wherein the providing module is further configured to provide a characteristic-specific scaling matrix that improves visual acuity of the block based on its transform frequency domain characteristics.

14. The system of claim 9, wherein the providing module is further configured to provide scaling matrix selection information for the block in a data stream and communicate the data stream to a decoder configured to perform an inverse transform operation using the scaling matrix.

15. The system of claim 14, wherein the providing module is further configured to provide a default scaling matrix in the data stream.
